(19) Europäisches Patentamt / European Patent Office / Office européen des brevets

(11) **EP 3 473 453 B1**

(12) **EUROPEAN PATENT SPECIFICATION**

(45) Date of publication and mention
of the grant of the patent:
**05.05.2021 Bulletin 2021/18**

(21) Application number: **16906358.3**

(22) Date of filing: **05.12.2016**

(51) Int Cl.:
**B60C 9/18** *(2006.01)*  **B60C 11/00** *(2006.01)*
**B60C 9/20** *(2006.01)*  **B60C 15/00** *(2006.01)*

(86) International application number:
**PCT/JP2016/086081**

(87) International publication number:
**WO 2017/221442 (28.12.2017 Gazette 2017/52)**

(54) **HEAVY DUTY PNEUMATIC TIRE**

SCHWERLASTLUFTREIFEN

PNEUMATIQUE POUR POIDS LOURDS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.06.2016 JP 2016121449**

(43) Date of publication of application:
**24.04.2019 Bulletin 2019/17**

(73) Proprietor: **Bridgestone Corporation
Tokyo 104-8340 (JP)**

(72) Inventor: **SAEKI Kentaro
Tokyo 104-8340 (JP)**

(74) Representative: **Oxley, Robin John George
Marks & Clerk LLP
15 Fetter Lane
London EC4A 1BW (GB)**

(56) References cited:
EP-A1- 3 028 873      EP-A2- 1 800 903
WO-A1-2007/062900     WO-A1-2007/128623
WO-A1-2012/110142     WO-A1-2014/010349
JP-A- S5 244 902      JP-A- H03 279 432
JP-A- S49 132 705     JP-A- 2003 211 911
JP-A- 2004 276 763    JP-A- 2009 012 539
JP-A- 2012 061 892    JP-A- 2012 153 193
US-A1- 2009 277 557   US-A1- 2012 060 995
US-A1- 2014 238 573   US-A1- 2014 373 992
US-A1- 2015 151 582

**Description**

TECHNICAL FIELD

The present invention relates to a heavy-duty pneumatic tire.

BACKGROUND

In known heavy-duty pneumatic tires used in heavy-load vehicles, such as trucks and buses, a belt having a plurality of belt layers is provided further outward in the tire radial direction than the crown portion of the carcass to improve durability, to preserve the tire shape when the tire is filled to a high internal pressure, and to improve the uneven wear resistance by controlling radial growth. For example, see patent literature (PTL) 1.

CITATION LIST

Patent Literature

PTL 1: JP2014189243A. Attention is also drawn to the disclosure of US2014/373992.

SUMMARY

(Technical Problem)

Increased interest in environmental issues has led to higher demand for fuel-efficient tires. In the above heavy-duty pneumatic tires with a plurality of belt layers, however, the rolling resistance may increase due to the increased weight from the belt layers. Hence, demand exists for controlling energy loss to reduce the rolling resistance and improve fuel efficiency.
In light of these circumstances, the present invention aims to provide a heavy-duty pneumatic tire with reduced rolling resistance.

(Solution to Problem)

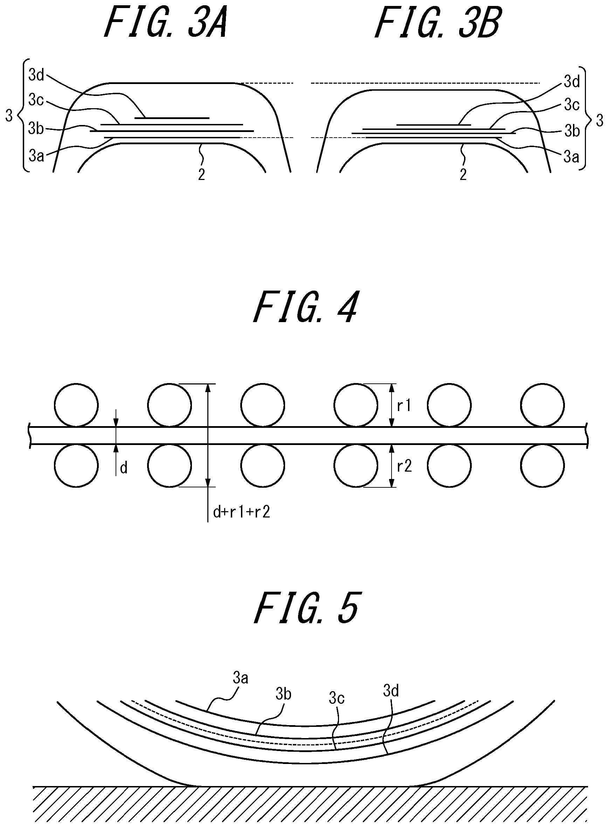

A summary of the present invention is as follows. A heavy-duty pneumatic tire according to the present invention is as claimed in claim 1. Preferred embodiments of the present invention are defined in the dependent claims.
In the present invention, the "inclination angle" and the "shortest distance" refer to the inclination angle and the shortest distance in a reference state in which the heavy-duty pneumatic tire is assembled with an applicable rim and inflated to the prescribed internal pressure with no load thereon. As illustrated in FIG. 4, the "shortest distance" refers to the shortest distance between surfaces of the reinforcing elements.
Here, the "applicable rim" refers to a standard rim of an applicable size, such as the Measuring Rim in the STANDARDS MANUAL of the European Tire and Rim Technological Organization (ETRTO) in Europe or the Design Rim in the YEAR BOOK of the Tire and Rim Association, Inc. (TRA) in the USA, that is described in industrial standards effective in the region where the tire is manufactured and used, such as the JATMA YEAR BOOK published by the Japan Automobile Tyre Manufacturers Association (JATMA) in Japan, the STANDARDS MANUAL of the ETRTO, and the YEAR BOOK of the TRA. The "prescribed internal pressure" represents the internal air pressure corresponding to the maximum load capability for each applicable size and ply rating prescribed by the aforementioned JATMA YEAR BOOK and the like. The "maximum load capability" represents the maximum mass, under the aforementioned standards, permitted to be loaded on the tire.
In the present invention, the "tread thickness" refers to the distance in the tire radial direction, at the tire equatorial plane, from the surface of the tread to the tire inner surface in the reference state. When a groove is provided at the tire equatorial plane, however, then a profile line that the tread would have without the groove is imagined, and the tread thickness refers to the distance in the tire radial direction, at the tire equatorial plane, from the imaginary profile line to the tire inner surface.

(Advantageous Effect)

The present invention can provide a heavy-duty pneumatic tire with reduced rolling resistance.

BRIEF DESCRIPTION OF THE DRAWINGS

In the accompanying drawings:

FIG. 1 is a partial cross-sectional view in the tire width direction of a heavy-duty pneumatic tire according to an embodiment of the present invention;
FIG. 2 schematically illustrates the belt structure of the heavy-duty pneumatic tire in FIG. 1;
FIG. 3A is a partial cross-sectional view in the tire width direction of an example of a known heavy-duty pneumatic tire, and FIG. 3B is a partial cross-sectional view in the tire width direction of a heavy-duty pneumatic tire according to an embodiment of the present invention;
FIG. 4 illustrates the distance between reinforcing elements of the first belt layer and reinforcing elements of the second belt layer; and
FIG. 5 illustrates the neutral axis of bending deformation of the belt layer when the tire rolls under a load.

DETAILED DESCRIPTION

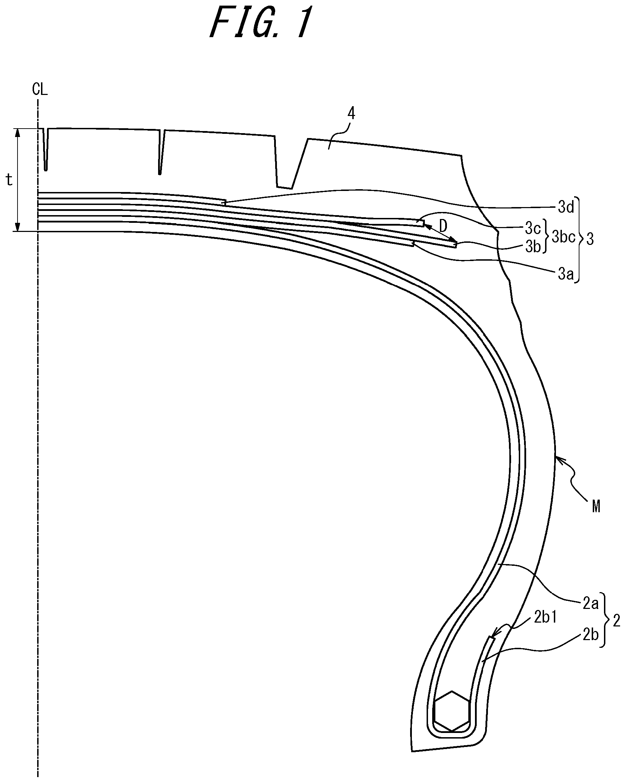

Embodiments of the present invention are described below in detail with reference to the drawings. FIG. 1 is a partial cross-sectional view in the tire width direction of a heavy-duty pneumatic tire (also simply "tire") according to an embodiment of the present invention. FIG. 1 illustrates only one of two halves of the tire, separated in the tire width direction by the tire equatorial plane CL, but the other half has a similar structure. FIG. 1 depicts the tire in a state where the tire has been assembled with an applicable rim and inflated to the prescribed internal pressure with no load thereon.
A tire 1 of the present embodiment includes a carcass 2, a belt 3, and a tread 4. The carcass 2 extends toroidally between bead cores embedded in a pair of bead portions. The belt 3 and the tread 4, in this order, are further outward in the tire radial direction than a crown portion of the carcass 2.
In the example illustrated in FIG. 1, the carcass 2 is composed of a pair of carcass plies, but the number of carcass plies may be more than two as necessary. The cords in the carcass 2 may be made of any material. For example, metal fiber cords such as steel cords may be used.
The carcass 2 is made of a carcass body 2a extending toroidally between the pair of bead portions and carcass folded-up portions 2b extending from the carcass body 2a and folded up at the bead portions from the inside to the outside in the tire width direction. When the tire has been assembled with an applicable rim and inflated to the prescribed internal pressure with no load thereon, a tire radial outer edge 2b1 of the carcass folded-up portion 2b is located further inward in the tire radial direction than a tire maximum width position M.
In the present embodiment, the belt 3 is made of four belt layers 3a to 3d. A first belt layer 3c and a second belt layer 3b, which is located further inward in the tire radial direction than the first belt layer 3c (adjacent to the first belt layer 3c in this example), form a two-layered inclined belt 3bc. A single-layer outer belt layer 3d is located further outward in the tire radial direction than the inclined belt 3bc. A single-layer inner belt layer 3a is located further inward in the tire radial direction than the inclined belt 3bc. The number of belt layers in the present embodiment is four. To improve tire durability, the number of belt layers located further outward or inward in the tire radial direction from the inclined belt 3bc may be increased for a total of five or more belt layers.

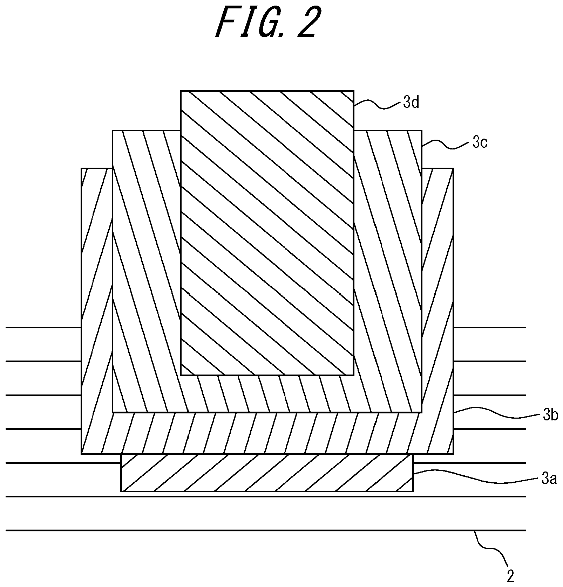

FIG. 2 schematically illustrates the belt structure of the heavy-duty pneumatic tire in FIG. 1. As illustrated in FIG. 2, reinforcing elements of the first belt layer 3c and reinforcing elements of the second belt layer 3b extend at an inclination angle of 5° to 30° relative to the tire circumferential direction in such a manner that the reinforcing elements of the first belt layer 3c cross the reinforcing elements of the second belt layer 3b. As illustrated in FIG. 2, in the present embodiment, the reinforcing elements of the first belt layer 3c and the reinforcing elements of the second belt layer 3b extend at the same inclination angle relative to the tire circumferential direction in opposite directions in such a manner that the reinforcing elements of the first belt layer 3c cross the reinforcing elements of the second belt layer 3b. In the present invention, however, the reinforcing elements of the first belt layer 3c and the reinforcing elements of the second belt layer 3b may extend at different inclination angles relative to the tire circumferential direction in opposite directions in such a manner that the reinforcing elements of the first belt layer 3c cross the reinforcing elements of the second belt layer 3b. In the present invention, the reinforcing elements of the first belt layer 3c and the reinforcing elements of the second belt layer 3b may also extend at different inclination angles relative to the tire circumferential direction in the same direction (with one side in the tire circumferential direction of the reinforcing elements in each layer being inclined towards the same side in the tire width direction) in such a manner that the reinforcing elements of the first belt layer 3c cross the reinforcing elements of the second belt layer 3b. In the present embodiment, the reinforcing elements are steel cords, but cords of a different material or filament may also be used.
In the tire of the present embodiment, the inclination angle of the reinforcing elements of the outer belt layer 3d relative to the tire circumferential direction is greater than the inclination angle of the reinforcing elements of the first belt layer 3c and the reinforcing elements of the second belt layer 3b relative to the tire circumferential direction, as illustrated in FIG. 2. Furthermore, in the present embodiment, the inclination angle of the reinforcing elements of the inner belt layer 3a relative to the tire circumferential direction is greater than the inclination angle of the reinforcing elements of the first belt layer 3c and the second belt layer 3b relative to the tire circumferential direction, as illustrated in FIG. 2.

In the tire of the present embodiment, the reinforcing elements of the outer belt layer 3d and the reinforcing elements of the inner belt layer 3a extend at the same inclination angle relative to the tire circumferential direction in opposite directions in such a manner that the reinforcing elements of the outer belt layer 3d cross the reinforcing elements of the inner belt layer 3a, as illustrated in FIG. 2. In the present invention, however, the reinforcing elements of the outer belt layer 3d and the reinforcing elements of the inner belt layer 3a may extend at different inclination angles relative to the tire circumferential direction in opposite directions in such a manner that the reinforcing elements of the outer belt layer 3d cross the reinforcing elements of the inner belt layer 3a. In the present invention, the reinforcing elements of the outer belt layer 3d and the reinforcing elements of the inner belt layer 3a may also extend at different inclination angles relative to the tire circumferential direction in the same direction (with one side in the tire circumferential direction of the reinforcing elements in each layer being inclined towards the same side in the tire width direction) in such a manner that the reinforcing elements of the outer belt layer 3d cross the reinforcing elements of the inner belt layer 3a.

FIG. 3A is a partial cross-sectional view in the tire width direction of an example of a known heavy-duty pneumatic tire, and FIG. 3B is a partial cross-sectional view in the tire width direction of a heavy-duty pneumatic tire according to an embodiment of the present disclosure. FIG. 4 illustrates the distance between reinforcing elements of the first belt layer and reinforcing elements of the second belt layer.

In a heavy-duty pneumatic tire, fretting wear may occur due to contact between reinforcing elements when a heavy load is applied, reducing the durability of the reinforcing elements. The shortest distance between reinforcing elements of different belt layers has therefore typically been maintained relatively high. As schematically illustrated in FIG. 3B by comparison with FIG. 3A, however, the tire of the present embodiment instead has a shortest distance d (see FIG. 4) between the reinforcing elements of the first belt layer 3c and the reinforcing elements of the second belt layer 3b of 0.64 mm or less.

The effects of the heavy-duty pneumatic tire of the present embodiment are described below.

First, the tire of the present embodiment includes four belt layers 3a to 3d as the belt 3, thereby increasing the tire durability even under a heavy load and maintaining the tire shape when the tire is filled to a high internal pressure. Furthermore, this structure can control radial growth and improve uneven wear resistance.

FIG. 5 illustrates the neutral axis of bending deformation of the belt layer when the tire rolls under a load. In a tire including the above-described inclined belt 3bc in which the reinforcing elements extend at a small inclination angle relative to the tire circumferential direction, i.e. an inclination angle of 5° to 30°, the neutral axis of bending deformation of the belt layer when the tire rolls under a load is located between the belt layers 3c, 3b that form the inclined belt 3bc, as illustrated in FIG. 5. In the case of a four-layer belt layer that includes both of the outer belt layer 3d and the inner belt layer 3a, the neutral axis of bending deformation is located between the belt layers 3c, 3b forming the inclined belt 3bc when the inclination angle relative to the tire circumferential direction of the reinforcing elements of the outer belt layer and the inclination angle relative to the tire circumferential direction of the reinforcing elements of the inner belt layer 3a are greater than the inclination angle relative to the tire circumferential direction of the reinforcing elements of the first belt layer 3c and the reinforcing elements of the second belt layer 3b.

The shortest distance d in the tire of the present embodiment is 0.64 mm or less, which allows a reduction in the sum of i) the distance between the central axis of the bending deformation and the reinforcing elements of the first belt layer 3c and ii) the distance between the central axis of the bending and the reinforcing elements of the second belt layer 3b. This also allows a reduction in the compressive and tensile forces experienced by the reinforcing elements of the inclined belt 3bc and a reduction in the distortion energy loss of rubber between the reinforcing elements of the first belt layer 3c and the reinforcing elements of the second belt layer 3b, thereby reducing the rolling resistance.

Furthermore, the tire of the present embodiment can improve the durability of the reinforcing elements by reducing the compressive and tensile forces experienced by the reinforcing elements of the inclined belt 3bc.

The tire of the present embodiment thus uses the four belt layers 3a to 3d to ensure the aforementioned properties of a heavy-duty pneumatic tire while reducing the energy loss of rubber in the inclined belt 3bc to reduce the rolling resistance. At this time, the tire of the present embodiment also ensures durability of the reinforcing elements.

Here, to further reduce the distortion energy loss of the rubber in the inclined belt 3bc, thereby further reducing the rolling resistance, the shortest distance d is more preferably 0.60 mm or less. On the other hand, to control fretting wear between reinforcing elements, the shortest distance d is 0.50 mm or more.

In the present invention, the tire preferably includes the tread 4 further outward in the tire radial direction than the inclined belt 3bc, and a thickness t of the tread 4 is preferably 20 mm to 35 mm, as in the present embodiment. As illustrated in FIG. 3B by comparison with FIG. 3A, the tire of the present embodiment has a lower shortest distance between the reinforcing elements of different belt layers. This allows a reduction in the thickness t of the tread 4 while maintaining a certain distance in the tire radial direction from the tread surface to the tire radial direction outermost belt layer 3d and a certain distance in the tire radial direction from the tire radial direction innermost belt layer 3a to the carcass 2. Setting the thickness t of the tread 4 in the aforementioned range can reduce the volume of the tread rubber, lower heat buildup, and further reduce rolling resistance. Three grooves are provided in the tread 4 within the range illustrated in FIG. 1, but the tread pattern is not restricted in the present disclosure.

When the outer belt layer 3d is provided further outward in the tire radial direction than the inclined belt 3b, the shortest distance da between the reinforcing elements of the first belt layer 3c and the reinforcing elements of the outer belt layer 3d is preferably 0.6 mm or less. This structure can reduce the distance between the reinforcing elements of the outer belt layer 3d and the neutral axis of bending and reduce the energy loss of rubber between the reinforcing elements of the outer belt layer 3d and the reinforcing elements of the first belt layer 3c, thereby further reducing the rolling resistance. Here, to further reduce the distortion energy loss of the rubber between the reinforcing elements of the outer belt layer 3d and the reinforcing elements of the first belt layer 3c, thereby further reducing the rolling resistance, the shortest distance da is 0.70 mm or less and preferably 0.60 mm or less. On the other hand, to control fretting wear between reinforcing elements, the shortest distance da is 0.50 mm or more.

When the inner belt layer 3a is included further inward in the tire radial direction than the inclined belt 3b, the shortest distance db between the reinforcing elements of the second belt layer 3b and the reinforcing elements of the inner belt layer 3a is preferably 0.6 mm or less. This structure can reduce the distance between the reinforcing elements of the inner belt layer 3a and the neutral axis of bending and reduce the energy loss of rubber between the reinforcing elements of the inner belt layer 3a and the reinforcing elements of the second belt layer 3b, thereby further reducing the rolling resistance. Here, to reduce the distortion energy loss of the rubber between the reinforcing elements of the inner belt layer 3a and the reinforcing elements of the second belt layer 3b, thereby reducing the rolling resistance, the shortest distance db is 0.70 mm or less and preferably 0.60 mm or less. On the other hand, to control fretting wear between reinforcing elements, the shortest distance db is 0.50 mm or more.

For the same reasons, the outer belt layer 3d is included further outward, and the inner belt layer 3a further inward, in the tire radial direction than the inclined belt 3b in the present disclosure. The shortest distance da and the shortest distance db are both 0.70 mm or less, preferably 0.60 mm or less. On the other hand, to control fretting wear between reinforcing elements, the shortest distance da and the shortest distance db are both 0.50 mm or more.

In the present invention,. the reinforcing elements of the outer belt layer 3d extend at an inclination angle of 60° to 90° relative to the tire circumferential direction. This structure can reduce the rigidity of the outer belt layer 3d relative to the tire circumferential direction to an appropriate level and control shearing deformation of rubber between the reinforcing elements of the first belt layer 3c and the reinforcing elements of the outer belt layer 3d, thereby further reducing the rolling resistance.

In the present invention, the reinforcing elements of the inner belt layer 3a extend at an inclination angle of 60° to 90° relative to the tire circumferential direction. This structure can reduce the rigidity of the inner belt layer 3a relative to the tire circumferential direction to an appropriate level and control shearing deformation of rubber between the reinforcing elements of the second belt layer 3b and the reinforcing elements of the inner belt layer 3a, thereby further reducing the rolling resistance.

In the present disclosure, the sum of

$$d + r1 + r2$$

is preferably 2.7 mm or more, where r1 is the diameter of the reinforcing elements of the first belt layer 3c, and r2 is the diameter of the reinforcing elements of the second belt layer 3b.

A somewhat large setting for the diameters r1, r2 of the reinforcing elements allows the load of bending deformation to be placed more reliably on the rubber between the reinforcing elements of the first belt layer 3c and the reinforcing elements of the second belt layer. Such a setting also facilitates achievement of the effects of the shortest distance d being 0.64 mm or less and can further reduce the rolling resistance.

Accordingly, the diameters r1, r2 of the reinforcing elements are preferably 0.8 mm to 1.3 mm.

In the present invention, the inclination angle of the reinforcing elements of the second belt layer 3b relative to the tire circumferential direction is preferably smaller than the inclination angle of the reinforcing elements of the first belt layer 3c relative to the tire circumferential direction.

As a result, the neutral axis of bending can be moved slightly inwards in the tire radial direction between the reinforcing elements of the first belt layer 3c and the reinforcing elements of the second belt layer 3b, and the deformation of rubber on the compression side, which has a relatively large energy loss, can be made relatively smaller than on the tensile side. This can further reduce the rolling resistance.

In the present invention, the shortest distance D between a tire widthwise outer edge of the first belt layer 3c and a tire widthwise outer edge of the second belt layer 3b is preferably 15 mm or more, as illustrated in FIG. 1. This

EP 3 473 453 B1

can control belt edge separation.

In the present invention, the width of the first belt reinforcement layer 3c and the width of the second belt reinforcement layer 3b in the tire width direction are preferably greater than the width of the outer belt layer 3d and the width of the inner belt layer 3a in the tire width direction. The outer belt layer 3d protects from external damage, and it suffices to protect the high-tension central region. The outer belt layer 3d can also reduce the tension between belt layers to reduce the rolling resistance. To achieve both uneven wear resistance and belt durability, the width of the second belt reinforcement layer 3b in the tire width direction is preferably maximized. Furthermore, the width of the outer belt layer 3d in the tire width direction is preferably approximately 40% to 60% of the width of the second belt reinforcement layer 3b in the tire width direction. This is to improve durability with respect to a sudden input of force. In the present invention, however, the width of each belt layer in the tire width direction is not restricted to the example embodiment in FIG. 1.

For ease of explanation, FIG. 4 illustrates an example in which the reinforcing elements of adjacent layers are arranged at equal intervals and matching phase. In the present invention, however, the number of reinforcing elements embedded in each layer may be changed, and the reinforcing elements may be arranged while shifting the phase.

In the present disclosure, the tire aspect ratio is preferably 50% to 90%.

Embodiments of the present invention have been described, but the present invention is in no way limited to the above embodiments. Furthermore, examples of the present invention are described below, but the present invention is in no way limited to these Examples.

EXAMPLES

To confirm the effects of the present invention, test tires with a tire size of 315/70R22.5 according to Examples 1-9 and a Comparative Example were prepared, and the rolling resistance, the uneven wear resistance, and the durability of the reinforcing elements were tested. The tires for Examples 1-7 and the Comparative Example had a tire structure such as the one in FIG. 1. The shortest distances d, da, db, and the aforementioned distance d + r1 + r2 differed, as listed in Table 1. The specifications not listed in Table 1 were the same for each tire. The evaluation method in each test is described below. In Table 1, the "inclination angle" refers to the inclination angle relative to the tire circumferential direction. Steel cords were used as the reinforcing elements. Of these, only examples 5 and 6 are in accordance with the present invention.

<Rolling Resistance>

The rolling resistance was measured with a force method conforming to ISO 28580. Table 1 lists relative evaluation results as index values, with the Comparative Example as 100. A smaller index value indicates lower rolling resistance and better performance.

<Uneven Wear Resistance>

Each of the aforementioned tires was assembled with a 9.00 × 22.5 size rim, filled to an internal pressure of 900 kPa, and mounted on an indoor drum test machine. Each tire was then run for a distance of 10,000 km at 80 km/h under a load of 39.2 kN. The amount of uneven wear at the shoulder portion of the tread of each tire after test running was then measured. In Table 1, the uneven wear resistance is the inverse of the value obtained by multiplying the wear depth (mm) from the tread surface side by the length of the uneven wear in the tire width direction and dividing by two. Table 1 lists relative evaluation results as index values, with the Comparative Example as 100. A larger index value indicates better uneven wear resistance.

<Durability of Reinforcing Elements>

Each of the aforementioned tires was assembled with a 9.00 × 22.5 size rim, filled to an internal pressure of 900 kPa, and mounted on an indoor drum test machine. Each tire was then run for a distance of 10,000 km at 80 km/h under a load of 39.2 kN. The belt was then cut out from the tire, and the amount of cord wear was measured.

Table 1 lists relative evaluation results as index values, with the Comparative Example as 100. A larger index value indicates higher durability of the reinforcing elements.

Table 1 lists the specifications and evaluation results for each tire.

[Table 1]

| | | Example 1 | Example 2 | Example 3 | Example 4 | Example 5 | Example 6 | Example 7 | Comparative Example |
|---|---|---|---|---|---|---|---|---|---|
| Belt layer | inclination angle of reinforcing elements of first belt layer 3c | 15° | 15° | 15° | 15° | 15° | 15° | 15° | 15° |
| | inclination angle of reinforcing elements of second belt layer 3b | 15° | 15° | 15° | 15° | 15° | 15° | 15° | 15° |
| | inclination angle of reinforcing elements of outer belt layer 3d | 45° | 45° | 45° | 45° | 45° | 45° | 45° | 45° |
| | inclination angle of reinforcing elements of inner belt layer 3a | 45° | 45° | 45° | 45° | 45° | 45° | 45° | 45° |
| Distance | shortest distance d(mm) | 0.64 | 0.60 | 0.64 | 0.64 | 0.64 | 0.60 | 0.64 | 0.70 |
| | shortest distance da (mm) | 0.75 | 0.75 | 0.75 | 0.70 | 0.70 | 0.60 | 0.75 | 0.75 |
| | shortest distance db (mm) | 0.75 | 0.75 | 0.70 | 0.75 | 0.70 | 0.60 | 0.75 | 0.75 |
| | distance d + r1 + r2 (mm) | 2.6 | 2.6 | 2.6 | 2.6 | 2.6 | 2.6 | 2.7 | 2.6 |
| Tread | tread thickness t(mm) | 30.0 | 30.0 | 29.9 | 29.9 | 29.8 | 30.0 | 30.0 | 30.0 |
| Rolling resistance | | 98 | 95 | 95 | 96 | 93 | 92 | 96 | 100 |
| Uneven wear resistance | | 100 | 100 | 102 | 103 | 105 | 100 | 104 | 100 |
| Durability of reinforcing elements | | 100 | 100 | 100 | 100 | 100 | 100 | 100 | 100 |

It is clear from Table 1 that each of the Examples 1 to 7 reduces the rolling resistance as compared to the Comparative Example, while ensuring uneven wear resistance and the durability of the reinforcing elements. It is also clear that Examples 2 to 7 reduce the rolling resistance even more than Example 1.

REFERENCE SIGNS LIST

| 1 | Heavy-duty pneumatic tire |
|---|---|
| 2 | Carcass |
| 2a | Carcass body |
| 2b | Carcass folded-up portion |
| 2b1 | Tire radial outer end |
| 3 | Belt |
| 3a | Inner belt layer |
| 3b | Second belt layer |
| 3c | First belt layer |
| 3d | Outer belt layer |
| 4 | Tread |
| CL | Tire equatorial plane |
| M | Tire maximum width position |

**Claims**

1. A heavy-duty pneumatic tire (1) comprising:

   a carcass (2) comprising a carcass body (2a) extending toroidally between a pair of bead portions and carcass folded-up portions (2b) extending from the carcass body (2a) and folded up at the bead portions from inside to outside in a tire width direction; and
   an inclined belt (3bc), further outward in a tire radial direction than a crown portion of the carcass (2), consisting of a first belt layer (3c) and a second belt layer (3b) further inward in the tire radial direction than the first belt layer (3c), reinforcing elements of the first belt layer (3c) and reinforcing elements of the second belt layer (3b) extending at an inclination angle of 5° to 30° relative to a tire circumferential direction in such a manner that the reinforcing elements of the first belt layer (3c) cross the reinforcing elements of the second belt layer (3b); wherein
   an outer edge of the carcass folded-up portions (2b) in the tire radial direction is located further inward in the tire radial direction than a tire maximum width position (M);
   the tire (1) further comprising:

   a single-layer outer belt layer (3d) further outward in the tire radial direction than the inclined belt (3bc); and
   a single-layer inner belt layer (3a) further inward in the tire radial direction than the inclined belt (3bc); wherein
   an inclination angle of reinforcing elements of the outer belt layer (3d) and reinforcing elements of the inner belt layer (3a) relative to the tire circumferential direction is greater than the inclination angle of the reinforcing elements of the first belt layer (3c) and the reinforcing elements of the second belt layer (3b) relative to the tire circumferential direction; and
the reinforcing elements of the inner belt layer (3a) extend at an inclination angle of 60° to 90° relative to the tire circumferential direction, **characterized in that** a shortest distance d between the reinforcing elements of the first belt layer (3c) and the reinforcing elements of the second belt layer (3b) is 0.50 mm or more and 0.64mm or less;
a shortest distance da between the reinforcing elements of the first belt layer (3c) and the reinforcing elements of the outer belt layer (3d) is 0.50mm or more and 0.70mm or less;
a shortest distance db between the reinforcing elements of the second belt layer (3b) and the reinforcing elements of the inner belt layer (3a) is 0.50mm or more and 0.70mm or less;
the reinforcing elements of the outer belt layer (3d) extend at an inclination angle of 60° to 90° relative to the tire circumferential direction.

2. The heavy-duty pneumatic tire (1) of claim 1, further comprising:

a tread (4) further outward in the tire radial direction than the inclined belt (3bc);
wherein a thickness of the tread (4) is 20 mm to 35 mm.

3. The heavy-duty pneumatic tire (1) of any one of claims 1 or 2, wherein d + r1 + r2 is 2.7 mm or more, where r1 is a diameter of the reinforcing elements of the first belt layer (3c) and r2 is a diameter of the reinforcing elements of the second belt layer (3b).

4. The heavy-duty pneumatic tire of any one of claims 1 to 3, wherein the inclination angle of the reinforcing elements of the second belt layer (3b) relative to the tire circumferential direction is smaller than the inclination angle of the reinforcing elements of the first belt layer (3c) relative to the tire circumferential direction.

**Patentansprüche**

1. Schwerlast-Luftreifen (1), der Folgendes umfasst:

eine Karkasse (2), die einen Karkassenkörper (2a), der sich kreisringförmig zwischen einem Paar von Wulstabschnitten erstreckt, und hochgeklappte Karkassenabschnitte (2b), die sich von dem Karkassenkörper (2a) aus erstrecken und an den Wulstabschnitten von innen nach außen in einer Reifenbreitenrichtung hochgeklappt sind, umfasst, und
einen geneigten Gürtel (3bc), weiter nach außen in einer Reifenradialrichtung als ein Scheitelabschnitt der Karkasse (2), bestehend aus einer ersten Gürtellage (3c) und einer zweiten Gürtellage (3b), weiter nach innen in der Reifenradialrichtung als die erste Gürtellage (3c), wobei sich Verstärkungselemente der ersten Gürtellage (3c) und Verstärkungselemente der zweiten Gürtellage (3b) auf eine solche Weise in einem Neigungswinkel von 5° bis 30° im Verhältnis zu einer Reifenumfangsrichtung erstrecken, dass die Verstärkungselemente der ersten Gürtellage (3c) die Verstärkungselemente der zweiten Gürtellage (3b) kreuzen,
wobei
eine äußere Kante der hochgeklappten Karkassenabschnitte (2b) in der Reifenradialrichtung weiter nach innen in der Reifenradialrichtung angeordnet ist als eine Position (M) maximaler Reifenbreite,
der Reifen (1) ferner Folgendes umfasst:

eine einlagige äußere Gürtellage (3d), weiter nach außen in der Reifenradialrichtung als der geneigte Gürtel (3bc), und
eine einlagige innere Gürtellage (3a), weiter nach innen in der Reifenradialrichtung als der geneigte Gürtel (3bc),
wobei
ein Neigungswinkel von Verstärkungselementen der äußeren Gürtellage (3d) und Verstärkungselementen der inneren Gürtellage (3a) im Verhältnis zu der Reifenumfangsrichtung größer ist als der Neigungswinkel der Verstärkungselemente der ersten Gürtellage (3c) und der Verstärkungselemente der zweiten Gürtellage (3b) im Verhältnis zu der Reifenumfangsrichtung,
und
sich die Verstärkungselemente der inneren Gürtellage (3a) in einem Neigungswinkel von 60° bis 90° im Verhältnis zu der Reifenumfangsrichtung erstrecken,
**dadurch gekennzeichnet, dass**: ein kürzester Abstand d zwischen den Verstärkungselementen der ersten Gürtellage (3c) und den Verstärkungselementen der zweiten Gürtellage (3b) 0,50 mm oder mehr und 0,64 mm oder weniger beträgt,

ein kürzester Abstand da zwischen den Verstärkungselementen der ersten Gürtellage (3c) und den Verstärkungselementen der äußeren Gürtellage (3d) 0,50 mm oder mehr und 0,70 mm oder weniger beträgt,

ein kürzester Abstand db zwischen den Verstärkungselementen der zweiten Gürtellage (3b) und den Verstärkungselementen der inneren Gürtellage (3a) 0,50 mm oder mehr und 0,70 mm oder weniger beträgt,

sich die Verstärkungselemente der äußeren Gürtellage (3d) in einem Neigungswinkel von 60° bis 90° im Verhältnis zu der Reifenumfangsrichtung erstrecken.

2. Schwerlast-Luftreifen (1) nach Anspruch 1, der ferner Folgendes umfasst:

eine Lauffläche (4), weiter nach außen in der Reifenradialrichtung als der geneigte Gürtel (3bc),
wobei eine Dicke der Lauffläche (4) 20 mm bis 35 mm beträgt.

3. Schwerlast-Luftreifen (1) nach einem der Ansprüche 1 bis 2, wobei d + r1 + r2 2,7 mm oder mehr beträgt, wobei r1 ein Durchmesser der Verstärkungselemente der ersten Gürtellage (3c) ist und r2 ein Durchmesser der Verstärkungselemente der zweiten Gürtellage (3b) ist.

4. Schwerlast-Luftreifen nach einem der Ansprüche 1 bis 3, wobei der Neigungswinkel der Verstärkungselemente der zweiten Gürtellage (3b) im Verhältnis zu der Reifenumfangsrichtung kleiner ist als der Neigungswinkel der Verstärkungselemente der ersten Gürtellage (3c) im Verhältnis zu der Reifenumfangsrichtung.

## Revendications

1. Bandage pneumatique pour poids lourds (1), comprenant :

une carcasse (2) comprenant un corps de carcasse (2a) s'étendant toroïdalement entre une paire de parties de talon et des parties repliées de carcasse (2b) s'étendant à partir du corps de la carcasse (2a) et repliées au niveau des parties de talon de l'intérieur vers l'extérieur dans une direction de la largeur du bandage pneumatique ; et
une ceinture inclinée (3bc), disposée davantage vers l'extérieur, dans une direction radiale du bandage pneumatique, qu'une partie de sommet de la carcasse (2), constituée par une première couche de ceinture (3c) et une deuxième couche de ceinture (3b), disposée davantage vers l'intérieur, dans la direction radiale du bandage pneumatique, que la première couche de ceinture (3c), des éléments de renforcement de la première couche de ceinture (3c) et des éléments de renforcement de la deuxième couche de ceinture (3b) s'étendant à un angle d'inclinaison compris entre 5° et 30° par rapport à une direction circonférentielle du bandage pneumatique, de sorte que les éléments de renforcement de la première couche de ceinture (3c) croisent les éléments de renforcement de la deuxième couche de ceinture (3b) ;
dans lequel :
un bord externe des parties repliées de la carcasse (2b), dans la direction radiale du bandage pneumatique, est disposé davantage vers l'intérieur, dans la direction radiale du bandage pneumatique, qu'une position à largeur maximale du bandage pneumatique (M) ;
le bandage pneumatique (1) comprenant en outre :

une couche de ceinture externe à couche unique (3d) disposée davantage vers l'extérieur, dans la direction radiale du bandage pneumatique, que la ceinture inclinée (3bc) ; et
une couche de ceinture interne à couche unique (3a) disposée davantage vers l'intérieur, dans la direction radiale du bandage pneumatique, que la ceinture inclinée (3bc) ;

dans lequel :

un angle d'inclinaison des éléments de renforcement de la couche de ceinture externe (3d) et des éléments de renforcement de la couche de ceinture interne (3a) par rapport à la direction circonférentielle du bandage pneumatique est supérieur à l'angle d'inclinaison des éléments de renforcement de la première couche de ceinture (3c) et des éléments de renforcement de la deuxième couche de ceinture (3b) par rapport à la direction circonférentielle du bandage pneumatique ;
et

les éléments de renforcement de la couche de ceinture interne (3a) s'étendent à un angle d'inclinaison compris entre 60° et 90° par rapport à la direction circonférentielle du bandage pneumatique ;

**caractérisé en ce que** : une distance la plus courte d entre les éléments de renforcement de la première couche de ceinture (3c) et les éléments de renforcement de la deuxième couche de ceinture (3b) correspond à 0,50 mm ou plus et à 0,64 mm ou moins ;

une distance la plus courte da entre les éléments de renforcement de la première couche de ceinture (3c) et les éléments de renforcement de la couche de ceinture externe (3d) correspond à 0,50 mm ou plus et à 0,70 mm ou moins ;

une distance la plus courte da entre les éléments de renforcement de la deuxième couche de ceinture (3b) et les éléments de renforcement de la couche de ceinture interne (3a) correspond à 0,50 mm ou plus et à 0,70 mm ou moins ;

les éléments de renforcement de la couche de ceinture externe (3d) s'étendent à un angle d'inclinaison compris entre 60° et 90° par rapport à la direction circonférentielle du bandage pneumatique.

2. Bandage pneumatique pour poids lourds (1) selon la revendication 1, comprenant en outre :

une bande de roulement (4) disposée davantage vers l'extérieur, dans la direction radiale du bandage pneumatique, que la ceinture inclinée (3bc) ;
dans lequel une épaisseur de la bande de roulement (4) est comprise entre 20 mm et 35 mm.

3. Bandage pneumatique pour poids lourds (1) selon l'une quelconque des revendications 1 ou 2, dans lequel d + r1 + r2 correspond à 2,7 mm ou plus, r1 désignant un diamètre des éléments de renforcement de la première couche de ceinture (3c) et r2 désignant un diamètre des éléments de renforcement de la deuxième couche de ceinture (3b).

4. Bandage pneumatique pour poids lourds selon l'une quelconque des revendications 1 à 3, dans lequel l'angle d'inclinaison des éléments de renforcement de la deuxième couche de ceinture (3b) par rapport à la direction circonférentielle du bandage pneumatique est inférieur à l'angle d'inclinaison des éléments de renforcement de la première couche de ceinture (3c) par rapport à la direction circonférentielle du bandage pneumatique.

# FIG. 1

# FIG. 2

## FIG. 3A

## FIG. 3B

## FIG. 4

## FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014189243 A

- US 2014373992 A